**Europäisches Patentamt**

**European Patent Office**

**Office européen des brevets**

(19)

(11) Veröffentlichungsnummer : **0 076 512**
**B1**

(12) # EUROPÄISCHE PATENTSCHRIFT

(45) Veröffentlichungstag der Patentschrift :
26.03.86

(51) Int. Cl.⁴ : **F 24 F   3/153, A 23 L   3/16**

(21) Anmeldenummer : **82109177.4**

(22) Anmeldetag : **05.10.82**

---

(54) **Frischhalteeinrichtung für Brot und dgl. Lebensmittel.**

---

(30) Priorität : **08.10.81 DE 3139998**

(43) Veröffentlichungstag der Anmeldung :
**13.04.83 Patentblatt 83/15**

(45) Bekanntmachung des Hinweises auf die Patenterteilung : **26.03.86 Patentblatt 86/13**

(84) Benannte Vertragsstaaten :
**AT BE CH FR GB IT LI LU NL SE**

(56) Entgegenhaltungen :
**CH-A-   166 702**
**DE-A- 2 940 242**
**DE-B- 1 949 001**
**DE-C-   289 195**
**FR-A- 1 278 089**
**GB-A- 1 476 119**
**US-A- 3 424 231**

(73) Patentinhaber : **Berrens, Wolfgang**
**Rebhuhnweg 17**
**D-4156 Willich (DE)**

(72) Erfinder : **Berrens, Wolfgang**
**Rebhuhnweg 17**
**D-4156 Willich (DE)**

(74) Vertreter : **Döring, Wolfgang et al**
**Kaiser-Wilhelm-Ring 41**
**D-4000 Düsseldorf 11 (DE)**

**Beschreibung**

Die Erfindung betrifft eine Frischhalteeinrichtung für Brot und dgl. Lebensmittel nach dem Oberbegriff des Patentanspruchs 1.

Aus der DE-A-2 940 242 ist eine Frischhalteeinrichtung bekannt, bei der der von einem Gebläse abgegebene Luftstrom über eine Heizeinrichtung, beispielsweise eine Infrarotheizung, geblasen wird, bevor er zur Kontakteinrichtung gelangt. Um die Temperatur des zirkulierenden Gasstromes regeln zu können, ist ein Temperaturmeßfühler so angeordnet, daß er sich mit dem die Kontakteinrichtung verlassenden erhitzten und feuchten Gasstrom in Kontakt befindet. Dieser Meßfühler liefert entsprechende Signale an einen Regler, der den Betrieb der Heinzeinrichtung steuert. Ein spezieller Feuchtigkeitsregler ist nicht vorgesehen ; der Feuchtigkeitsgehalt des zirkulierenden Gasstromes wird allein über die Einstellung der Konzentration der verwendeten Salzlösung reguliert. Die Konzentration der Salzlösung wird über eine Schwimmerschaltung mit oberem und unterem Grenzschalter im Vorratsbehälter der Salzlösung mit entsprechender Frischwasserzufuhr konstant gehalten.

Bei der bekannten Frischhalteeinrichtung ist die Konditioniervorrichtung an der Decke des Behältnisses angebracht. Spezielle Leit- bzw. Führungseinrichtungen für den Umgewälzten Gasstrom sind nicht vorgesehen.

Eine Frischhalteeinrichtung mit den Merkmalen des Oberbegriffs des Patentanspruchs 1 ist aus der US-A-3 424 231 bekannt. Es handelt sich bei dieser Einrichtung um eine übliche Klimakammer, bei der der umgewälzte Gasstrom durch Sprühkontakt mit einer Flüssigkeit (Wasser) befeuchtet wird. In den Wänden (Türen) der Einrichtung sind Heizvorrichtungen vorgesehen, um eine Kondensatbildung zu vermeiden. Der zirkulierende Gasstrom wird über elektrisch beheizte Heizschlagen geführt, die an eine geeignete elektrische Stromquelle angeschlossen sind. Trotz der getroffenen Maßnahmen besteht beim Betrieb der bekannten Einrichtung die Gefahr, daß sich in dem Behältnis Temperatur- und/oder Feuchtigkeitsgradienten ergeben können. So kann es beispielsweise zu einer Kondensatbildung auf den zu lagernden Produkten kommen. Desweiteren kann sich der Gasstrom trotz abgeschalteter Heizeinrichtung zunehmend erwärmen, was im wesentlichen auf die vom Gebläse abgeführte Verlustwärme zurückzuführen ist.

Der Erfindung liegt die Aufgabe zugrunde, eine Frischhalteeinrichtung der angegebenen Art zu schaffen, mit der bei gleichzeitiger Erzielung einer weitgehenden Entkeimung in besonders wirksamer Weise Taupunktunterschreitungen vermieden und weitgehend gleichmäßige und konstante Temperatur- und Feuchtigkeitsbedingungen innerhalb des Behältnisses herstellbar und aufrechterhaltbar sind.

Diese Aufgabe wird erfindungsgemäß durch eine Einrichtung mit den kennzeichnenden Merkmalen des Patentanspruchs 1 gelöst.

Die erfindungsgemäß ausgebildete Einrichtung funktioniert so, daß der Gasstrom mit Hilfe der Salzlösung befeuchtet wird, die aufgeheizt werden muß, um bei guter Entkeimung einen hohen erwünschten Feuchtigkeitsgrad zu erreichen.

Der zirkulierende Gasstrom wird ferner nicht direkt erhitzt, sondern ausschließlich über die Wandheizvorrichtungen, die in spezieller Weise gesteuert werden. Durch dieses Aufheizen sowie durch die Gebläseverlustwärme steigen die Temperaturwerte so hoch an, daß über die vorgesehenen Wärmetauscher gekühlt werden muß, was ohne den Einsatz eines komplizierten Kälteaggregates durch Blasen von Luft über den zweiten Wärmetauscher erreicht wird.

Um einen ordnungsgemäßen Betrieb der erfindungsgemäßen Einrichtung sicherzustellen, weist diese einen Temperaturregler, den ein im zirkulierenden Gasstrom angeordneter Temperatursensor ansteuert, und einen Feuchtigkeitsregler, den ein im zirkulierenden Gasstrom angeordneter Feuchtigkeitssensor ansteuert, auf. Der Temperaturregler steuert dabei die Funktionsweise der Wärmetauscher. Der Feuchtigkeitsregler steuert eine der Sprüheinrichtung für den Kontaktkörper zugeordnete Pumpe an. Wenn beispielsweise der Feuchtigkeitsgehalt des Gasstromes erhöht werden soll, wird die Pumpe eingeschaltet und bewirkt eine Umwälzung der Salzlösung über den Kontaktkörper, der von dem Gasstrom etwa horizontal durchströmt wird.

Wenn der Temperatursensor im Gasstrom an den Temperaturregler ein Kühlsignal weitergibt, so steuert dieser den dem zweiten Wärmetauscher zugeordneten Ventilator an, so daß dieser tätig wird. Dadurch wird kühlere Außenluft über den zweiten Wärmetauscher geführt, bei dem es sich wie bei dem ersten Wärmetauscher um einen üblichen Lamellenwärmetauscher handeln kann, wodurch das umgewälzte Strömungsmittel (Wasser) gekühlt wird. Das Strömungsmittel wird durch die Umwälzpumpe zum ersten Wärmetauscher geführt, wo es mit dem erhitzten Gasstrom in wärmeaustauschende Beziehung gelangt. Der Gasstrom wird auf diese Weise gekühlt. Die Umwälzpumpe läuft im allgemeinen kontinuierlich, d. h. auch dann, wenn der dem zweiten Wärmetauscher zugeordnete Ventilator außer Betrieb ist.

Um Temperatur- und Feuchtigkeitsgradienten innerhalb des Behältnisses zu vermeiden, die insbesondere auch zur Kondensatbildung auf dem frisch zu haltenden Produkt führen können, ist eine intensive und gleichmäßige Gasumwälzung über den Kammerquerschnitt erforderlich. Es hat sich dabei gezeigt, daß eine etwa horizontale Gasführung in bezug auf das Frischhalten der Produkte die besten Ergebnisse liefert. Die gleichmäßige Gasumwälzung wird durch den Einsatz von Querstromventilatoren in Verbindung mit der Anordnung der Lochwände erreicht, die benachbart zu den Seitenwänden des Behältnisses angeordnet sind und zusammen mit diesen entsprechende Gasführungskanäle begrenzen.

**0 076 512**

Der zwischen den Lochwänden befindliche Lagerraum für die frisch zu haltenden Produkte kann dadurch auf allen Querschnittshöhen etwa horizontal angeströmt werden, wobei durch entsprechende Variation des freien Querschnittes der Lochwände über deren Höhe (auf der Einblasseite ist der freie Querschnitt der Lochwände bei Anordnung der Konditioniervorrichtung an der Decke des Behältnisses unten kleiner als oben, auf der Aufblasseite umgekehrt) auch eine etwa gleiche Gasgeschwindigkeit erreicht werden kann. Dadurch gelingt es, die Temperatur und den Feuchtigkeitsgehalt des Gasstromes im Bereich des Lagerraumes im großen und ganzen gleichmäßig und konstant zu halten.

Es versteht sich, daß durch die vorstehend angedeuteten Maßnahmen eine Kondensatbildung nicht nur am Produkt und den Innenseiten der Wände des Behältnisses, sondern auch an den Einbauten innerhalb des Behältnisses (Lochwände, Lagergestelle für die Produkte, Konditioniervorrichtung, etc.) in wirksamer Weise vermieden werden kann.

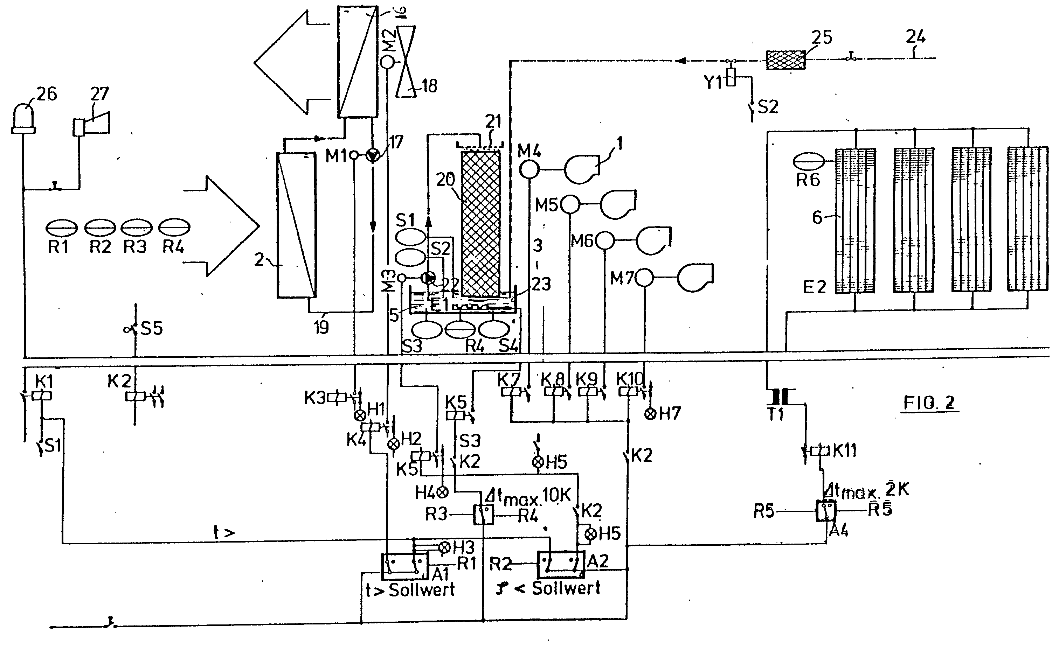

Ergänzend zum Stand der Technik sei diesbezüglich noch die DE-C-2 89 195 erwähnt, in der ebenfalls eine Frischhalteeinrichtung für Brot beschrieben ist. Auch bei dieser bekannten Einrichtung wird ein befeuchteter Luftstrom umgewälzt und dabei über die frisch zu haltenden Produkte geführt. Wie Figur 2 der Veröffentlichung jedoch zeigt, erfolgt die Luftführung in Vertikalrichtung, wobei die frisch zu haltenden Produkte von unten angeblasen werden. Dies entspricht nicht der erfindungsgemäßen Vorgehenweise.

Es versteht sich, daß auch bei der erfindungsgemäß ausgebildeten Einrichtung für ein Konstanthalten der Konzentration der Salzlösung dadurch gesorgt wird, daß ein Vorratsbehälter der Salzlösung mit einer Schwimmerschaltung versehen ist, so daß bei Absinken des Flüssigkeitsspiegels unter einen unteren Grenzwert Frischwasser zugeführt und somit die durch das Ausdampfen aus der Lösung bewirkte Konzentrationserhöhung wieder rückgängig gemacht wird. Eine derartige Einrichtung ist in der erwähnten DE-A-29 40 242 beschrieben.

Wie bereits in der genannten DE-A-29 40 242 erwähnt ist, wird durch die über eine Salzlösung durchgeführte Luftbefeuchtung gleichzeitig eine weitgehende Entkeimung erzielt, wenn eine entsprechende Salzlösung (beispielsweise Lithiumchlorid) mit einer entsprechenden Konzentration eingesetzt wird. Es hat sich nunmehr jedoch gezeigt, daß solche Lösungskonzentrationen, die die für die Frischhaltung besten und sehr hohen Feuchtigkeitswerte (um 95 %) liefern, keine ausreichende Entkeimung mehr gewährleihsten, da die Konzentrationen zu niedrig sind. Um die Entkeimung zu verbessern, ergibt sich daher die Notwendigkeit einer höheren Lösungskonzentration. Diese höhere Konzentration führt jedoch bei Normaltemperatur nicht zu dem gewünschten Feuchtigkeitswert, so daß ein Erhitzen der Lösung erforderlich ist. Diese Erkenntnis macht sich die Erfindung zunutze. In dem Behälter für die Salzlösung ist ein Heizelement angeordnet, das derart steuerbar ist, daß es eine Lösungstemperatur aufrechterhält, die um einen vorgegebenen Wert über der Temperatur des zirkulierenden Gasstromes liegt. Wenn beispielsweise unter Einsatz einer 30 %igen Salzlösung, die eine ausreichende Entkeimung gewährleistet, ein Fauchtigkeitswert von 95 % erzielt werden soll, wird die Lösungstemperatur um ca. 10 °C höher als die Temperatur des umgewälzten Gasstromes gehalten. Dies geschieht steuerungstechnisch so, daß der Salzlösung und dem zirkulierenden Gasstrom jeweils ein Temperatursensor zugeordnet ist, die einen Differenzregler ansteuern, der den Betrieb des im Behälter angeordneten Heizelementes steuert.

Wie bereits erwähnt, werden dei Wände des Behältnisses derart beheizt, daß an der Wandinnenseite eine Temperatur erzeugt wird, die um einen vorgegebenen Wert über der Temperatur des zirkulierenden Gasstromes liegt. Auf diese Weise wird mit Sicherheit die Bildung von Kondensat ausgeschaltet. Zweckmäßigerweise wird dies konstruktiv dadurch verwirklicht, daß die Wandheizvorrichtungen als gitterförmige elektrische Heizungen, insbesondere Widerstandsheizungen, ausgebildet sind, die in die Wände des Behältnisses integriert sind. Die Wände selbst sind dabei sandwichartig aus einem Innen- und Außenblech und einer dazwischen angeordneten Kunststoffschaumschicht aufgebaut, wobei sich die gitterförmigen Heizungen in direktem Kontakt mit der Außenfläche der Innenbleche befinden. Dadurch werden Konvektionsverluste vermieden. Es hat sich als zweckmäßig erwiesen, die Temperatur an der Innenseite der Wände des Behältnisses um maximal 2 °C über der Temperatur des zirkulierenden Gasstromes zu halten. Steuerungstechnisch wird dies dadurch erreicht, daß der Innenseite der Wandung des Behältnisses und dem zirkulierenden Gasstrom jeweils ein Temperatursensor zugeordnet ist, die einen Differenzregler ansteuern, der den Betrieb der Wandheizvorrichtungen steuert.

Die Konditioniervorrichtung ist vorzugsweise an der Decke des Behältnisses angeordnet. Der bzw. die Querstromventilatoren fördern dabei den Gasstrom zuerst über den ersten Wärmetauscher und dann über den Befeuchter, dem ggf. ein Tropfenabscheider zugeordnet sein kann. Der Gastrom ist dabei horizontal gerichtet, wobei der Lagerraum für die frisch zu haltenden Produkte durch eine geeignete Trennwand, beispielsweise in Form einer abgehängten Decke, von der Konditioniervorrichtung abgetrennt sein kann. An den Ecken des Behältnisses sind zweckmäßigerweise geeignete Leitorgane angebracht, um den horizontalen Gasstrom in die Vertikale und somit in den Gasführungskanal abzuleiten. Bei dieser Ausführungsform ist der freie Querschnitt der Lochwände an der Einglasseite unten kleiner als oben und an der Ausblasseite oben kleiner als unten. Dadurch wird im oberen und unteren Bereich des Lagerraumes eine etwa gleiche Gasgeschwindigkeit sichergestellt.

Die Erfindung wird nunmehr anhand eines Ausführungsbeispiels in Verbindung mit der Zeichnung im einzelnen erläutert. Es zeigen :

3

Figur 1 einen Vertikalschnitt durch eine erfindungsgemäß ausgebildete Frischhalteeinrichtung; und

Figur 2 ein Funktionsschema der Frischhalteeinrichtung der Figur 1.

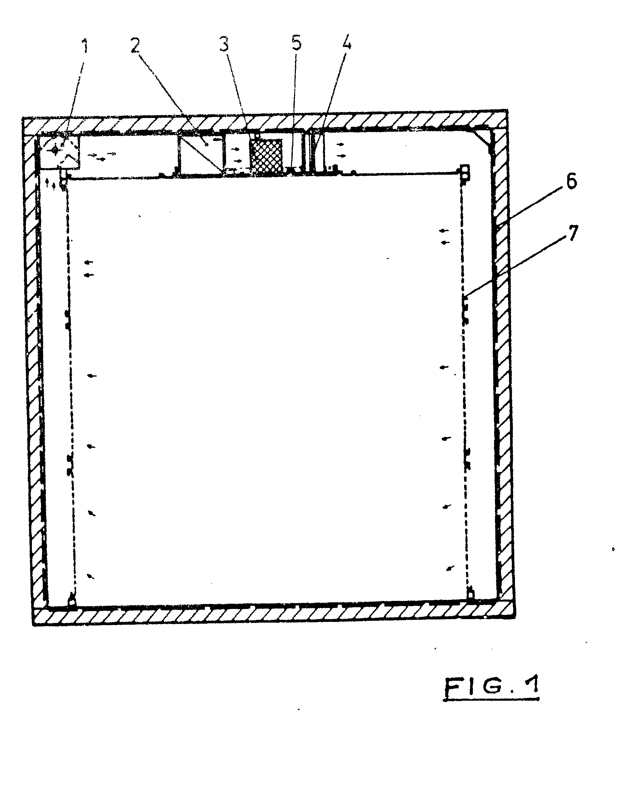

Die in Figur 1 im Schnitt dargestellte Frischhalteeinrichtung besteht aus einem gegenüber der umgebenden Atmosphäre wärme- und wasserdampfisolierten Behältnis, das mit einer Tür und einem Beobachtungsfenster (nicht gezeigt) ausgestattet ist, und einer in dem Behältnis angeordneten Konditioniervorrichtung 10 für die im Behältnis befindliche Luft, um diese mit einer gegenüber Raumbedingungen erhöhten Temperatur und erhöhten relativen Feuchtigkeit zu versehen. Es wird ein Temperaturbereich von ca. 30-50 °C und ein Feuchtigkeitsbereich von ca. 80-95 % angestrebt. Bei diesen Werten läßt sich insbesondere Brot über eine längere Zeitdauer frischhalten.

Die Konditioniervorrichtung 10 ist an der Decke 11 das Behältnisses angeordnet und von einem Lagerraum 15 im Behältnis für die frisch zu haltenden Produkte durch eine Wand 12, beispielsweise eine abgehängte Decke, getrennt. Benachbart zu den Seitenwänden 13 des Behältnisses sind Lochwände 7 angeordnet, die den Lagerraum 15 seitlich begrenzen und zusammen mit den Seitenwänden 13 des Behältnisses vertikale Luftführungskanäle 14 begrenzen.

Die Konditioniervorrichtung 10 umfaßt mindestens einen Querstromventilator 1, der Luft etwa vertikal ansaugt und diese etwa horizontal durch den zwischen der Wand 12 und der Decke 11 des Behältnisses befindlichen Raum abbläst. Der Luftstrom gelangt dabei zuerst über einen Wärmetauscher 2, mittels dem er ggf. gekühlt wird, wonach er etwa horizontal über den Kontaktkörper eines Befeuchters 3 geleitet wird. Der Luftstrom nimmt hier die gewünschte Feuchtigkeit aus einer über den Kontaktkörper umgewälzten Salzlösung 5 auf, die in einem Behälter aufgefangen und erneut umgewälzt wird. Dem Befeuchter 3 ist ein Tropfenabscheider 4 nachgeschaltet.

Der nunmehr auf die gewünschte Temperatur und Feuchtigkeit gebrachte Luftstrom wird an der Ecke des Behältnisses über geeignete Leiteinrichtungen 28 in die Vertikale umgelenkt und tritt dabei in den Luftführungskanal 14 ein. Die Lochwände 7 weisen an der Einblasseite einen freien Querschnitt auf, der unten kleiner ist als oben, während der frei Querschnitt an der Ausblasseite oben kleiner als unten ist. Dadurch gelingt es, innerhalb des Lagerraumes 15 oben und unten etwa eine Gleichmäßige Luftgeschwindigkeit zu erreichen, die vorzugsweise zwischen 0,2 und 0,3 m/s betragen sollte. Im Lagerraum 15 wird eine gleichmäßige horizontale Luftströmung erzielt, durch die Temperaturgradienten weitgehend vermieden werden. Der Luftstrom tritt an der anderen Lochwand wieder aus und wird von dem Querstromventilator 1 durch den zweiten Luftführungskanal nach oben gesaugt.

Um Taupunktunterschreitungen an den Wänden des Behältnisses zu verhindern, sind diese mit gitterförmigen Heizvorrichtungen 6 versehen, die die Innenseite der Wände des Behältnisses konstant auf einer Temperatur halten, die um einen bestimmten Maximalwert über der Temperatur des umgewälzten Luftstromes liegt. Die von den Wänden abgestrahlte Wärmeenergie sowie die Ventilator-Verlustwärme wird gleichzeitig zur Beheizung des Luftstromes nutzbar gemacht, so daß spezielle Heizeinrichtungen für diesen entfallen können. Der erwähnte Wärmetauscher 2 wird daher in erster Linie zum Kühlen des Luftstromes eingesetzt, falls dies erforderlich sein sollte.

Figur 2 zeigt ein Funktions- und Schaltschema der in Figur 1 dargestellten Frischhalteeinrichtung. Bei dem hier dargestellten Ausführungsbeispiel weist die Konditioniervorrichtung vier Querstromventilatoren 1 mit Motoren M4-M7 auf. Es sei vorausgesetzt, daß die Anlage mit einer Temperatur von 30-50 °C und einer relativen Luftfeuchtigkeit von 95 % gefahren werden soll. Um über die Konzentration der verwendeten Salzlösung 5 (LiCl) diesen Feuchtigkeitswert einzustellen, wäre eine etwa 5 %ige Salzlösung erforderlich. Eine Lösung mit einer derart niedrigen Konzentration sorgt jedoch nicht mehr für eine ausreichende Entkeimung, so daß mit einer höheren Konzentration (30 %) und einer erhöhten Temperatur der Salzlösung gearbeitet wird. Diese Temperatur soll um max. 10 °C über der Temperatur des umgewälzten Luftstromes liegen. Um dies zu erreichen, ist im Behälter 23 für die Salzlösung 5 ein Heizelement E1 vorgesehen, das über einen Differenzregler A3 angesteuert wird. Dem Differenzregler ist ein Temperatursensor R3 im umgewälzten Luftstrom und ein Temperatursensor R4 in der Salzlösung zugeordnet. Der Regler vergleicht die Differenz zwischen den von den beiden Sensoren gelieferten Signalen und steuert den Betrieb des Heizelementes E1 in entsprechender Weise.

Um die Konzentration der Salzlösung konstant auf dem gewünschten Wert von 30 % zu halten, wird über eine nicht dargestellte Schwimmerschaltung die Frischwasserzufuhr 24, in der ein Wasserenthärter 25 angeordnet ist, angesteuert. Durch das zunehmende Ausdampfen aus der Salzlösung steigt deren Konzentration an, und der Flüssigkeitsspiegel im Behälter 23 sinkt ab. Bei Unterschreiten eines unteren Grenzwertes betätigt die Schwimmerschaltung die Frischwasserzufuhr, so daß dadurch die Konzentration wieder bis zu einem oberen Grenzwert erniedrigt wird.

Die Regelung des Feuchtigkeitsgehaltes im Luftstrom erfolgt über einen Feuchtigkeitsregler A2, dem ein Feuchtigkeitssensor R2 im Luftstrom zugeordnet ist. Wenn der Feuchtigkeitssensor R2 eine zu niedrige Feuchtigkeit im Luftstrom anzeigt, betätigt der Regler die Berieselungspumpe 22 des Befeuchters 3, wodurch die Salzlösung über die Sprüheinrichtung 21 und den Kontaktkörper 20 umgewälzt wird. Dies geschieht so lange, bis der entsprechende Fehlbedarf ausgeglichen ist.

Der Betrieb der elektrischen Heizgitter 6 für die Wandbeheizung wird ebenfalls über einen Differenzregler A4 gesteuert, dem ein im Luftstrom angeordneter Temperatursensor R5 und ein an der Innenseite der beheizten Wände des Behältnisses angeordneter Temperatursensor R6 zugeordnet ist.

4

Wie erwähnt, wird der Betrieb der Heizgitter 6 so geregelt, daß die Wandtemperatur an der Innenseite um maximal 2 °C über der Temperatur des umgewälzten Luftstromes liegt. Die Heizgitter werden bei der hier dargestellten Ausführungsform mit Niederspannung betrieben.

Die zum Kühlen des Luftstromes erforderliche Einrichtung umfaßt einen innerhalb des Behältnisses angeordneten Wärmetauscher 2 und einen außerhalb des Bahältnisses angeordneten Wärmetauscher 16 (Lamellenwärmetauscher), die über eine Rohrleitung 19 zu einem geschlossenen Kreis miteinander verbunden sind. Durch die Rohrleitung 19 wird über eine Pumpe 17 kontinuierlich Wasser umgewälzt. Dem zweiten Wärmetauscher 16 ist ein Ventilator 18 zugeordnet, wenn er im Betrieb ist, Außenluft über den Wärmetauscher bläst und auf diese Weise das darin umgewälzte Wasser kühlt. Wenn das gekühlte Wasser durch den ersten Wärmetauscher 2 umgewälzt wird, kühlt es dabei den die Lamellen passierenden Luftstrom ab.

Zur Temperaturregelung des Luftstromes dient ein Temperaturregler A1, dem ein Temperatursensor R1 im Luftstrom zugeordnet ist. Wenn der Temperatursensor R1 eine zu hohe Lufttemperatur anzeigt, was nach einer gewissen Betriebszeit der Einrichtung im allgemeinen der Fall sein wird, da die Ventilator-Verlustwärme und die von den Wänden abgestrahlte Wärme den Luftstrom aufheizen, schaltet der Regler A1 den Ventilator 18 ein, wodurch das permanent umgewälzte Wasser gekühlt wird. Dadurch wird eine Abkühlung des Luftstromes auf den gewünschten Wert erreicht.

Zur Regelung des Betriebes der Einrichtung sind daher vier Regler erforderlich, der Temperaturregler A1, der Feuchtigkeitsregler A2, der Differenzregler A3 für die Temperatur des Salzlösung und der Differenzregler A4 für die Temperatur der Heizgitter. Auf die übrigen erforderlichen Schaltelemente (Schützen, Störanzeigen, etc.), die in der nachfolgenden Tabelle aufgelistet sind, soll im einzelnen nicht mehr eingegangen werden. Bei dem hier dargestellten Ausführungsbeispiel ist die Anlage mit einer akustischen und optischen Störanzeige 27, 26 versehen, die dem Benutzer rechtzeitig Fehlfunktionen anzeigen.

## Legende zum Funktions- und Schaltschema

| | | |
|---|---|---|
| A 1 | Temperaturregler | |
| A 2 | Feuchteregler | |
| A 3 | Differenzregler | Befeuchtung |
| A 4 | Differenzregler | Wandheizung |
| | | |
| E 1 | Heizung | Befeuchter |
| | | |
| H 1 | Störlampe | Umwälzpumpe Kühlsystem |
| H 2 | Störlampe | Ventilator Kühlsystem |
| H 3 | Störlampe | Temperatur zu hoch |
| H 4 | Störlampe | Umwälzpumpe Befeuchter |
| H 5 | Störlampe | Heizung Befeuchter |
| H 6 | Störlampe | Feuchte zu niedrig |
| H 7 | Störlampe | Umluftventilatoren |
| | | |
| K 1 | Schütz | Zentralalarm |
| K 2 | Schütz | Türschalter |
| K 3 | Schütz | Umwälzpumpe Kühlsystem |
| K 4 | Schütz | Ventilator Kühlsystem |
| K 5 | Schütz | Umwälzpumpe Befeuchter |
| K 6 | Schütz | Heizung Befeuchter |
| K 7-10 | Schütz | Umluftventilatoren |
| K 11 | Schütz | Wandheizung |
| | | |
| M 1 | Motor | Umwälzpumpe Kühlsystem |
| M 2 | Motor | Ventilator Kühlsystem |
| M 3 | Motor | Umwälzpumpe Befeuchter |
| M 4-7 | Motoren | Umluftventilatoren |
| | | |
| R 1 | Temperatursensor für Temperaturregler | |
| R 2 | Feuchtigkeitssensor für Feuchtigkeitsregler | |
| R 3 | Temperatursensor für Differenzregler A3 | |
| R 4 | Temperatursensor für Differenzregler A3 | |
| R 5 | Temperatursensor für Differenzregler A4 | |
| R 6 | Temperatursensor für Differenzregler A4 | |

# 0 076 512

| | | |
|---|---|---|
| S 1 | Niveau-Sicherheitsschalter - Befeuchter | |
| S 2 | Niveau-Schalter - Befeuchter | |
| S 3 | Sicherheitsthermostat - Befeuchter | |
| S 5 | Türkontaktschalter | |
| T 1 | Transformator - Wandheizung | |
| Y 1 | Magnetventil - Wassernachspeisung - Befeuchter | |

**Patentansprüche**

1. Frischhalteeinrichtung für Brot und dgl. Lebensmittel mit einem gegenüber der umgebenden Atmosphäre wärme- und wasserdampfisolierten Behältnis zur Lagerung des Brotes und einer in diesem angeordneten Vorrichtung (10) zur Konditionierung des im Behältnis befindlichen Gasgemisches (Luft), um dieses mit einer gegenüber üblichen Raumbedingungen erhöhten relativen Feuchtigkeit und Temperatur zu versehen, die ein Gebläse zur Erzeugung eines zirkulierenden Gasstromes, eine Einrichtung (3) zum Inkontaktbringen des Gasstromes mit einer Flüssigkeit, die eine Sprüheinrichtung (21) und einen Behälter (23) zum Sammeln der Flüssigkeit aufweist, in dem ein Heizelement (E1) angeordnet ist, und Vorrichtungen (6) zur Beheizung der Innenseite der Wände des Behältnisses umfaßt, wobei in dem Behältnis zu dessen Seitenwänden benachbart Lochwände (7) angeordnet sind, die zwischen sich einen Lagerraum für die frischzuhaltenden Produkte bilden und zusammen mit den zugehörigen Seitenwänden des Behältnisses Gasführungskanäle begrenzen, und wobei das Gebläse mindestens einen Querstromventilator (1) umfaßt, der eine vom Gasführungskanal ausgehende, im wesentlichen horizontale Gasführung durch den Lageraum zu erzeugen vermag, dadurch gekennzeichnet, daß die Einrichtung zum Inkontaktbringen des Gasstromes mit der Flüssigkeit einen von dem Gasstrom etwa horizontal durchströmten, nach dem Verdunstungsprinzip arbeitenden Kontaktkörper (20) umfaßt, der von der Sprüheinrichtung (21) mit der wässrigen Lösung eines Salzes besprüht wird, daß das in dem Behälter (23) für die Flüssigkeit angeordnete Heizelement (E1) derart steuerbar ist, daß es eine Lösungstemperatur aufrecht erhält, die um einen vorgegebenen Wert über der Temperatur des zirkulierenden Gasstromes liegt, daß die Wandheizvorrichtungen (6) derart steuerbar sind, daß sie eine Wandinnenseitentemperatur aufrecht erhalten, die um einen vorgegebenen Wert über der Temperatur des zirkulierenden Gasstromes liegt, und daß der Gasstrom über mindestens einen ersten Wärmetauscher (2) geführt wird, der über einen geschlossenen Kühlkreis, durch den ein Strömungsmittel kontinuierlich umwälzbar ist, mit einem außerhalb des Behältnisses angeordneten zweiten Wärmetauscher (16) in Verbindung steht, dem ein über einen Temperaturregler (A1) ansteuerbarer Ventilator (18) zugeordnet ist.

2. Einrichtung nach Anspruch 1, dadurch gekennzeichnet, daß der Temperaturregler (A1) von einem im zirkulierenden Gasstrom angeordneten Temperatursensor (R1) steuerbar ist und daß sie einen Feuchtigkeitsregler (A2), den ein im zirkulierenden Gasstrom angeordneter Feuchtigkeitssensor (R2) ansteuert, aufweist.

3. Einrichtung nach Anspruch 2, dadurch gekennzeichnet, daß der Sprüheinrichtung (21) eine Pumpe (22) zugeordnet ist, die durch den Feuchtigkeitsregler (A2) ansteuerbar ist.

4. Einrichtung nach einem der vorangehenden Ansprüche, dadurch gekennzeichnet, daß die Wandheizvorrichtungen als gitterförmige elektrische Heizungen (6) ausgebildet sind, die in die Wände des Behältnisses integriert sind.

5. Einrichtung nach Anspruch 4, dadurch gekennzeichnet, daß die Wände des Behältnisses sandwichartig aus einem Innen- und Außenblech und einer dazwischen angeordneten Kunststoffschaumschicht aufgebaut sind, wobei sich die gitterförmigen Heizungen (6) in direktem Kontakt mit der Außenfläche der Innenbleche befinden.

6. Einrichtung nach einem der vorangehenden Ansprüche, dadurch gekennzeichnet, daß der Innenseite der Wandung des Behältnisses und dem zirkulierenden Gasstrom jeweils ein Temperatursensor (P.6, R5) zugeordnet ist, die einen Differenzregler (A4) ansteuern, der den Betrieb der Wandheizvorrichtungen steuert.

7. Einrichtung nach einem der vorangehenden Ansprüche, dadurch gekennzeichnet, daß der Salzlösung (5) und dem zirkulierenden Gasstrom jeweils ein Temperatursensor (R4, R3) zugeordnet ist, die einen Differenzregler (A3) ansteuern, der den Betrieb des im Behälter angeordneten Heizelementes (E1) steuert.

8. Einrichtung nach einem der vorangehenden Ansprüche, dadurch gekennzeichnet, daß bei Anordnung der Konditioniervorrichtung (10) an der Decke (11) des Behältnisses der freie Querschnitt der Lochwände (7) an der Einblasseite unten kleiner als oben und an der Ausblasseite oben kleiner als unten ist.

6

## Claims

1. A preservation device for bread and like foodstuffs comprising a receptacle for storing bread, which receptacle is insulated in terms of heat and water vapor from the surrounding atmosphere, and a device (10) located in said receptacle for conditioning the gas mixture (air) located in the receptacle to provide said gas mixture with an increased relativ humidity and temperature in relation to customary ambient conditions, said device including a fan for generating a circulating gas stream, means (3) for. bringing the gas stream into contact with a liquid, said means including spraying means (21) and a container (23) for collecting the liquid in which a heating element (E1) is disposed, and devices (6) for heating the inside of the walls of the receptacle, the receptacle, adjacent to its side walls, having perforated walls (7) which form a storage space for the products to be kept fresh between them and which, together with the associated side walls of the receptacle, limit gas-conveying channels, and wherein the fan includes at least one cross-flow ventilator (1) which is capable of generating an essentially horizontal gas conveyance beginning from the gas-conveying channel and passing through the storage space, characterized in that said means for bringing the gas stream into contact with liquid includes a contact body (20) through which the gas stream flows approximately horizontally and which operates on the evaporation principle, said contact body being sprayed by said spraying means (21) with an aqueous solution of a salt, in that the heating element (E1) disposed in said container (23) for the liquid is adapted to be controlled in such a way that it maintains a solution temperature which is a predetermined value above the temperature of the circulating gas stream, in that said devices (6) for heating the inside of the walls of the receptacle are adapted to be controlled in such a way that they maintain an inside wall temperature which is a predetermined value above the temperature of the circulating gas stream, and in that the gas stream is conveyed over at least one first heat exchanger (2) which, by means of a closed cooling loop through which a fluid can be circulated continuously, is connected to a second heat exchanger (16) located outside the receptacle and associated with a ventilator (18) controllable by a temperature regulator (A1).

2. The device according to claim 1, characterized in that said temperature regulator (A1) is controllable by a temperature sensor (R1) located in the circulating gas stream, and in that said device includes a humidity regulator (A2) which is controlled by a humidity sensor (R2) located in the circulating gas stream.

3. The device according to claim 2, characterized in that said spraying means (21) is associated with a pump (22) which is controllable by said humidity regulator (A2).

4. The device according to one of the preceding claims, characterized in that said devices for heating the inside of the walls of the receptacle are designed as grid-like electrical heatings (6) which are integrated into the walls of said receptacle.

5. The device according to claim 4, characterized in that the walls of said receptacle are formed in a sandwich-like manner by an inner and an outer metal sheet and a plastic foam layer located therebetween, said grid-like heatings (6) being in direct contact with the outside surface of the inner metal sheets.

6. The device according to one of the preceding claims, characterized in that the inside of the walls of said receptacle and the circulating gas stream are each associated with a temperature sensor (R6, R5) which controls differential regulator (A4) for controlling the operation of said devices for heating the inside of the walls of the receptacle.

7. The device according to one of the preceding claims, characterized in that the salt solution (5) and the circulating gas stream each are associated with a temperature sensor (R4, R3) which controls a differential regulator (A3) for controlling the operation of the heating element (E1) located in said receptacle.

8. The device according to one of the preceding claims, characterized in that, if the device (10) for conditioning is located at the ceiling (11) of said receptacle, the free cross-section of said perforated walls (7) is smaller below than above at the blow-in side and is smaller above than below at the blow-out side.

## Revendications

1. Installation pour maintenir à l'état frais du pain et des aliments analogues, avec une capacité isolée, par rapport à l'atmosphère ambiante, de la chaleur et de la vapeur d'eau, pour la conservation du pain, et avec un dispositif (10) prévu dans cette installation pour conditionner le mélange gazeux (air) qui se trouve dans la capacité, pour lui donner un degré d'humidité relatif et une température élevés par rapport aux conditions d'ambiance habituelles, qui comporte une soufflerie pour engendrer un courant gazeux circulant, une installation (3) pour mettre le courant gazeux en contact avec un liquide, laquelle installation comprend un dispositif de pulvérisation (21) et un récipient (23) pour recueillir le liquide, dispositif dans lequel est placé un élément chauffant (E1), et des dispositifs (6) pour chauffer la face intérieure des parois de la capacité, où, dans la capacité, à proximité de ses parois latérales, sont disposées des parois perforées (7) qui forment entre elles un espace d'entreposition pour les produits à maintenir frais et qui, ensemble avec les parois latérales correspondantes de la capacité, délimitent des canaux de conduite de gaz, et où la soufflerie comprend au moins un ventilateur (1) à courant transversal, qui peut engendrer à travers l'espace d'entreposition un courant gazeux en principe horizontal partant du canal de conduite de gaz, caractérisée en ce que l'installation pour la mise en contact du courant gazeux avec le liquide comprend un corps de contact (20) parcouru à peu près horizontalement par le courant gazeux et travaillant d'après le principe de l'évaporation, le corps (20) étant arrosé de la solution aqueuse d'un sel par le dispositif de pulvérisation ; en ce que l'élément chauffant (E1) disposé dans le récipient (23) pour le liquide peut être commandé de telle sorte qu'il maintienne une température de la solution qui soit supérieure d'une valeur prédéterminée à la température du courant gazeux en circulation ; en ce que les dispositifs (6) de chauffage des parois peuvent être commandés de telle sorte qu'ils maintiennent une température des faces intérieures des parois qui soit supérieure d'une valeur prédéterminée à la température du courant gazeux en circulation ; et en ce que le courant gazeux est conduit en passant par au moins un premier échangeur de chaleur (2) qui est en communication, par l'intermédiaire d'un circuit de refroidissement fermé à travers lequel un agent d'écoulement circule d'une façon continue dans un sens et dans l'autre, avec un deuxième échangeur de chaleur (16) disposé à l'extérieur de la capacité, auquel est associé un ventilateur (18) pouvant être commandé par l'intermédiaire d'un régulateur de température (A1).

2. Installation suivant la revendication 1, caractérisé en ce que le régulateur de température (A1) peut être commandé par un dispositif (R1) sensible à la température, disposé dans le courant gazeux en circulation, et en ce qu'elle comporte un régulateur de température (A2) que commande un dispositif (R2) sensible à l'humidité, disposé dans le courant gazeux en circulation.

3. Installation suivant la revendication 2, caractérisé en ce qu'au dispositif de pulvérisation (21) est associée une pompe (22) pouvant être commandée par le régulateur d'humidité (A2).

4. Installation suivant l'une quelconque des revendications précédentes, caractérisée en ce que les dispositifs de chauffage des parois sont réalisés en dispositifs chauffants électriques (6) en forme de grilles qui sont intégrés aux parois de la capacité.

5. Installation suivant la revendication 4, caractérisée en ce que les parois de la capacité sont construites en sandwich comprenant une tôle intérieure et une tôle extérieure et une couche de mousse de matière synthétique disposée entre elles, les dispositifs chauffants électriques (6) en forme de grilles se trouvant en contact direct avec la surface extérieure des tôles intérieures.

6. Installation suivant l'une quelconque des revendications précédentes, caractérisée en ce qu'à la face intérieure de la paroi de la capacité et au courant gazeux en circulation est associé chaque fois un dispositif (R6, R5) sensible à la température, qui commandent un régulateur différentiel (A4), lequel commande la marche des dispositifs de chauffage des parois.

7. Installation suivant l'une quelconque des revendications précédentes, caractérisée en ce qu'à la solution saline (5) et au courant gazeux en circulation est associé chaque fois un dispositif (R4, R3) sensible à la température, qui commandent un régulateur différentiel (A3), lequel commande la marche de l'élément chauffant (E1) disposé dans le récipient.

8. Installation suivant l'une quelconque des revendications précédentes, caractérisée en ce que dans l'agencement du dispositif de conditionnement (10) au plafond (11) de la capacité, la section libre des parois perforées (7) est plus petite en bas qu'en haut, du côté de l'entrée des gaz insufflés, et est plus petite en haut qu'en bas du côté de la sortie des gaz.

FIG.1

FIG. 2